# EUROPEAN PATENT APPLICATION

(11) **EP 2 017 509 A1**
(43) Date of publication of application: **21.01.2009**
(21) Application number: 08156425.4
(22) Date of filing: 19.05.2008
(51) Int. Cl.: F16J 15/32, E06B 7/22, B66B 13/30, A46D 1/00, H02G 15/013

(54) **Environmental brush seal**

(30) Priority: 18.06.2007 US 820118
(71) Applicant: Jason Incorporated, Cleveland, OH 44114-3997 (US)
(72) Inventor: Mattice, Douglas A., Richmond, VA 23236-2481 (US)
(74) Representative: Gille Hrabal Struck Neidlein Prop Roos

(57) **Abstract**

A passive brush seal effectively to limit conditioned air such as humidity, temperature or filtered air, or contaminated air such as smoke or fumes from an area of greater pressure to one of lower pressure. The passive brush seal is in the form of a strip brush with polygonal filaments that provide an improved block to the flow of gases. The shape of the filaments is such that they inter-fit or interlock and separate less readily. Important applications are as elevator seals or clean room or computer room seals.

## Description

### Disclosure

This invention relates generally as indicated to an environmental brush seal, and more particularly to a strip brush passive seal or barrier shield for protecting or isolating environments such as elevator shafts, clean rooms, computer rooms, or other gaps or closures where pressure differentials may exist.

### Background of the Invention

Strip brushes are normally formed by folding a layer of filaments about a wire core that is clinched by a channel folded about the bight portion of the filaments and the core. Typically the filaments are circular in section, and metal or plastic such as nylon, and the core and channel may be plastic or metal. Other strip brush constructions may also be used, such as melting or gluing or stapling one end of the filament into a retaining strip material.

Strip brushes have long been used as passive environmental seals for shielding and closing gaps. Applications include paint and powder booths, dark rooms, clean rooms, computer rooms, cable management, wiring and lever seals, as well as a wide variety of door seals. Other applications include garage doors, elevator doors or any gap seal such as the sides of moving escalators or walkways. An example of such brush seals are those made and sold by SEALEZE®, a unit of Jason Incorporated, of Richmond, Virginia.

### Summary of the Invention

It has been discovered that a more effective environmental seal is obtained if the filaments are polygonal in transverse section, and of such a shape that the filaments when not separated will nest with each other to form a barrier or wall without significant pockets or separations. The relatively sharp corners of the filaments, which inter-fit or interlock, require greater pressures to force the filaments apart. More rounded corners are more easily forced apart or past one another to create openings or gaps for smoke or gases to pass through. Polygonal filaments form a tighter barrier. The preferred polygons are the more simple shapes such as rectangle or square, a triangle or hexagon, although others may be employed.

The angled corners of the filaments are more effective than the typical cylindrical or round filament since the angled corners tend to create turbulence in the form of eddies or vortices as air tries to move past the filaments from an area of higher pressure to that of lower pressure reducing the force on the filaments.

The improved environmental seal or shield has many applications. One of the applications is as a smoke seal in elevator shafts.

Elevator shafts in buildings often experience phenomena called stack effect, which is the induction of airflow caused by a difference in temperature between the air inside and the air outside of the building. When the air outside is colder than the inside air, airflow is induced upward. When the air is warmer outside of the building than inside, airflow is induced downward into the building. In the event of a fire within the building, or the generation of toxic or noxious gases, smoke and gases can be pulled into elevator shafts and transported via the shaft to other floors of the building. Openings in closed elevator doors can permit these gases and smoke to leak beyond the confines of the elevator shaft and into lobby areas on otherwise unaffected floors.

To reduce or eliminate the passing of these gasses and smoke through the openings of these closed elevator doors, several devices have been designed to restrict the openings in these doors. Examples of these devices include assemblies disclosed in U.S. Patent No. 5,383,510 issued 1/24/95, U.S. Patent No. 5,195,594 issued 3/23/93, and U.S. Patent 5,836,424 issue dated 11/17/1998.

Computer rooms and other rooms which are environmentally controlled for manufacturing processes often have passages through the floors or walls to provide access for cables, or in walls between rooms for the passage of utilities or materials between rooms. These openings often permit undesired flow of air (smoke, fumes, dust, etc.) between those rooms and cause unwanted contamination, or higher load air cleaning or conditioning requirements. The polygonal filaments used in the device provide easy passage of materials or cables through the filaments, and yet their polygonal shape provides greater resistance to undesired air flow than the commonly used round filaments.

To the accomplishment of the foregoing and related ends the invention, then, comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.

### Brief Description of the Drawings

Figure 1 is an illustration of an environmental brush seal of the present invention mounted on an elevator door-in-sill configuration;
Figure 2 is a similar illustration with a sill guide in a sill configuration;
Figure 3 is a similar illustration of the brush seal in a double door with a sill guide in a sill configuration;
Figure 4 is an illustration of the brush seal at a sliding door and doorway header configuration;
Figure 5 shows the brush seal applied to the elevator sliding door and doorjamb or side-of-door configuration;
Figure 6 illustrates the application to a typical elevator double door seal gap;
Figure 7 shows a bottom door seal on a typical swing door;
Figure 8 illustrates the brush seals facing each other in a mail delivery letter-slot frame;
Figure 9 illustrates the brush seals in a similar frame acting as a grommet for wiring or utilities into a computer or clean room;
Figure 10 illustrates a brush seal with an impervious flexible center barrier held in place by the filaments on opposite sides;
Figure 10A illustrates a strip brush according to the invention made by another method.
Figure 11 is a transverse enlarged section of a polygonal filament in a square configuration;
Figure 12 is a transverse section through a group of such square filaments slightly separated on a reduced scale;
Figure 13 is a further reduced section through a group of such filaments showing how they nest to form a wall;
Figure 14 is a schematic illustration of air, smoke or gas flow past the edges illustrating the eddies and vortices created by the sharp corners;
Figure 15 is a transverse enlarged section of a polygonal filament in a hexagonal configuration;
Figure 16 is a transverse section through a group of such hexagonal filaments slightly separated on a reduced scale;
Figure 17 is a further reduced section through a group of such filaments showing how they nest to form a wall;
Figure 18 is a schematic illustration like Figure 14 showing the eddies and vortices created by the corners;
Figure 19 is a transverse enlarged section of a polygonal filament of triangular configuration;
Figure 20 is a transverse section through a group of such triangular filaments slightly separated on a reduced scale;
Figure 21 is a further reduced section through a group of such filaments showing how they nest to form a wall; and
Figure 22 is a schematic illustration like Figures 14 or 18 showing the vortices or eddies created by the sharp corners upon flow of smoke or gases therepast.

### Detailed Description of the Preferred Embodiment

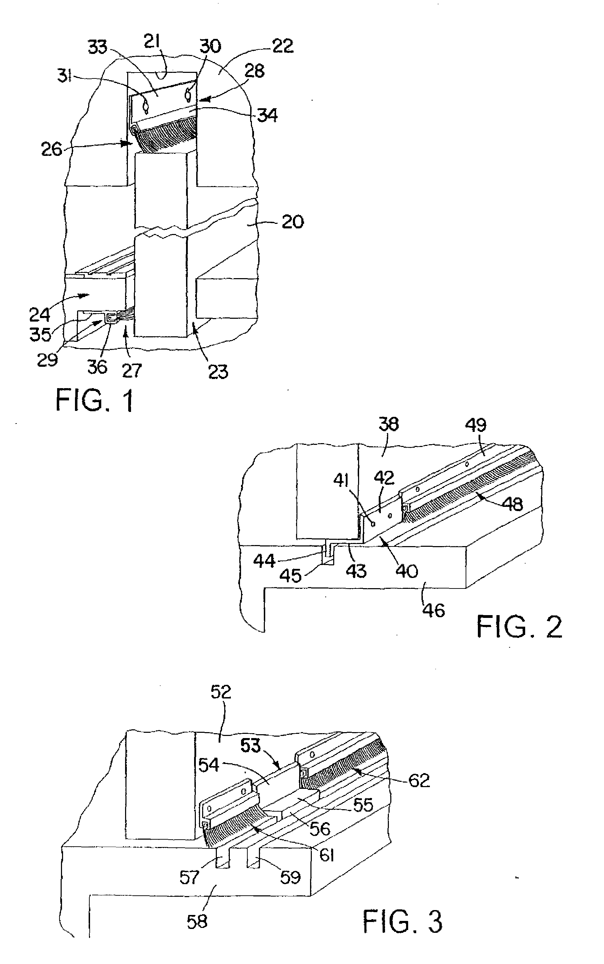

Referring first to Figure 1 there is illustrated an elevator door at 20 which projects into a slot 21 in header 22 and also rides in slot 23 in sill 24. The door slides toward and away from the viewer within the header and sill slots. The door is of course shown broken away foreshortening its vertical height. The typical roller-track structure and actuator are not shown.

In Figure 1, two environmental seals in accordance with the invention are shown, one at 26 within the header slot 21, and the other at 27 within the sill slot 23. The seals are in the form of strip brushes hereinafter described which slide into the channels of aluminum extruded holders shown at 28 and 29, respectively, held to the structures by fasteners shown at 30 which extend through elongated slots 31 permitting the holder to be adjusted toward and away from the moving door. It is noted that the assembly of Figure 1 shows two different types of holders. At the top the holder has an angled flange 33 extending from the inside corner of the channel 34 while the sill seal 27 holder 29 has a straight flange 35 extending from the inside corner of the channel 36. The strip brush seals engage the entire top of the door within the slot 21 and the entire front of the door below the sill sealing the hallway or foyer on the left from the shaft on the right when the door is closed.

Referring now to Figure 2 an elevator door 38 is provided with a bottom sill guide 40 fastened to the interior corner of the door by fasteners 41 extending through upwardly extending flange 42. The sill guide extends beneath the door as shown at 43 and terminates in a downwardly extending flange 44 riding in slot 45 in sill 46.

The environmental seal strip brush 48 mounted in straight flange holder 49 is fastened to the door adjacent the guide 40 as shown and rides against the sill as the door moves.

In Figure 3, one door 52 of a double door - sill guide configuration is shown. The door includes a sill guide 53 which includes an upper flange 54 fastened to the door 52, a horizontal projection 55, and a downwardly extending flange 56 riding in slot 57 in sill 58. The other slot 59 is for the second door, not shown.

In this configuration two environmental seal assemblies are employed, shown at 61 and 62 adjacent to and on each side of the sill guide 53.

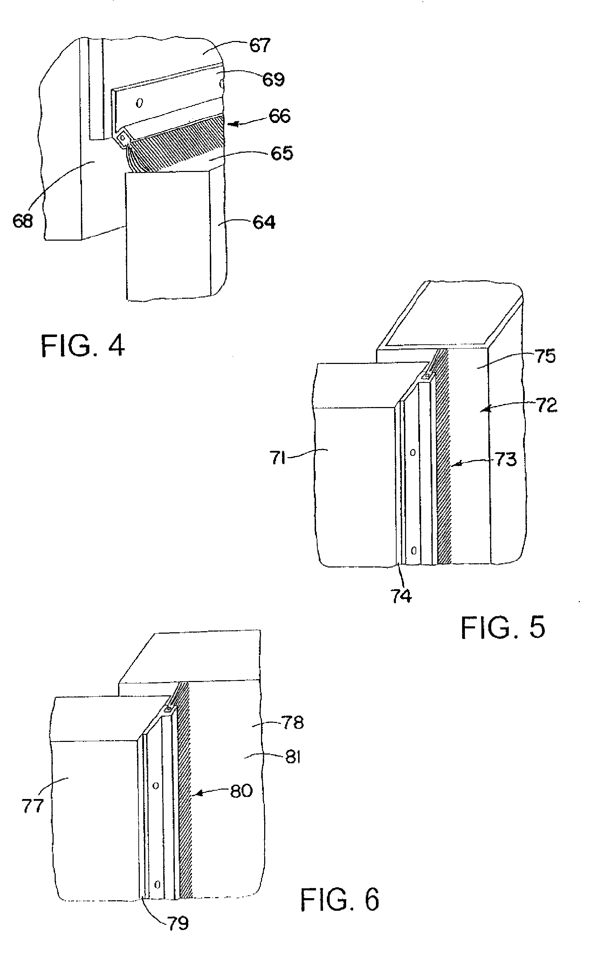

In Figure 4 the sliding door 64 is sealed at its top 65 by environmental seal assembly 66 fastened to wall panel 67 in turn mounted on header 68. The seal assembly includes the angled flange holder 69 fastened to the wall panel. The door moves toward and away from the viewer as in Figure 1.

In Figure 5 there is a typical sliding door and doorjamb configuration. In this figure the door 71 moves parallel to the plane of the figure while the jamb 72 at the side of the door is fixed. An environmental seal assembly shown at 73 is mounted on the end 74 of the door 71. In the Figure 5 position the door is closed and the adjusted projecting edge of the seal assembly engages the face 75 of the jamb creating the seal at the side of the door.

In Figure 6 there is illustrated a typical elevator double door seal at the gap between the sliding doors 77 and 78. The end or edge 79 of the door 77 has mounted thereon the environmental seal assembly 80 in the same manner as in Figure 5. The projecting edge of the seal assembly rides however against the face 81 of the door 78. While the seal of Figure 5 closes the gap between the sliding door and jamb, the seal of Figure 6 closes the gap between the two sliding doors.

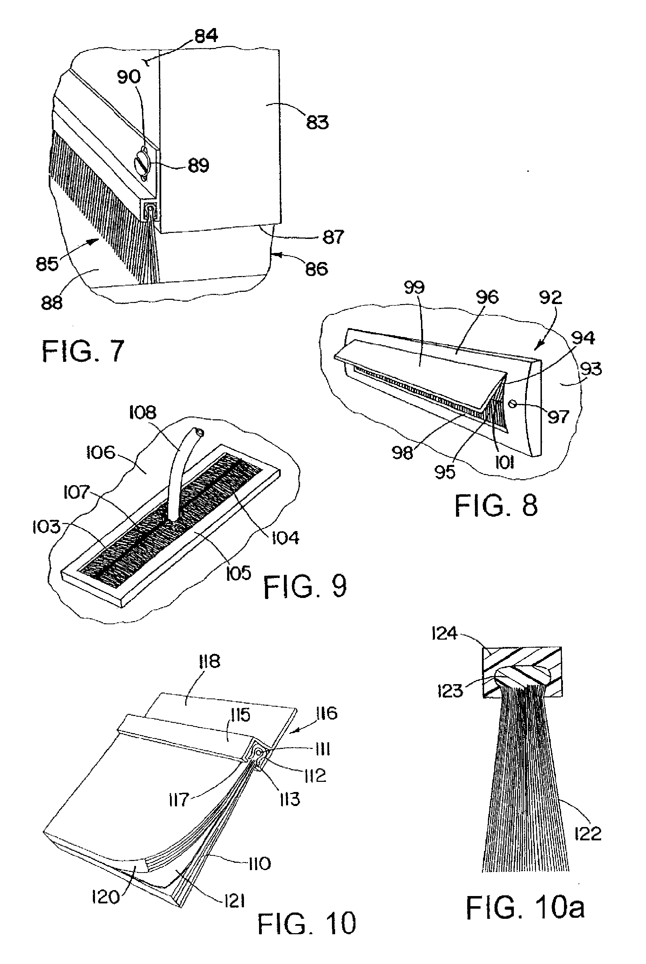

In Figure 7 there is illustrated a different type of door 83, which may be a variety of types, such as a hinged swinging door or an overhead garage door. Mounted on the lower edge of the face 84 is an environmental seal assembly 85 closing the gap 86 between the bottom of the door and the floor 88. With a swinging door the projecting edge of the seal assembly will ride or sweep against the floor. With an overhead door the seal will close the gap only when the door is closed. Figure 7 more clearly shows the fastener 89 and slot 90 in the holder enabling the sill to be adjusted to close the gap existing when the door is closed.

The improved environmental seal of the present invention also has application as astragal seals and two such examples are seen in Figures 8 and 9. Astragal seals are those where the projecting edges of the seals just touch, abut or confront each other, such as closing the gap between two doors.

Figure 8 illustrates what would normally be called a mail slot assembly shown generally at 92. A typical application would be on a door 93. The strip brush seals shown at 94 and 95 are mounted in a rectangular frame 96 secured around a slot in the door (not shown) by fasteners 97. The frame forms an open slot 98 and an optional angled roof or shield 99 projects from the top of the slot. The filaments of the two facing brush strip seals just touch each other at 101. This permits items such as mail to be pushed through the slot without exposing the interior to the wind or weather on the exterior.

A similar assembly is shown in Figure 9. The environmental seals 103 and 104 are mounted in elongated rectangular frame 105 mounted over a slot or opening in surface 106. The tips of the seals just touch or abut each other at the line 107. The applications of the assembly are many and varied. For example the surface 106 may be the wall, floor, ceiling or a column surface in a clean room or computer room where the interior air is cleansed and conditioned, and normally at a higher pressure than the outside air. The seal assembly then permits the introduction into the room through the seal assembly of utilities such as the illustrated wiring 108. Piping or tubing may equally well project through the seal assembly without compromising the interior of the room.

Another use for the assembly of Figure 9 would be as a gearbox or housing cover and the projecting item would become a gearshift handle or operating lever. The assembly permits the handle to move along the line 107 while protecting the interior of the box from dirt or debris (and the exterior from grease).

Figure 10 illustrates one form of strip brush seal in accordance with the invention, and also illustrates the components of one method of seal assembly construction.

The polygonal filaments are shown at 110 and they are formed as a layer folded about wire core 111 and clenched at the fold by channel 112. The channel is provided with slightly flared edges seen at 113 that serves several purposes. It avoids biting into the filaments with a sharp edge and the flare or projection of the edges provides support when the strip brush is inserted into channel 115 of holder 116. The channel 115 has short internal flanges or edges 117 that fit beneath or against the flared edges 113, keeping the brush strip in the channel when telescoped in from the end. The holder is of the straight flange type with mounting flange 118 projecting from the corner of the channel.

The face 120 of the folded layered filament bundle is trimmed to the desired length and face, and between the two sides of the folded bundle there is provided an optional impervious sheet 121. The inner end of the sheet may extend to and around the wire core or simply be secured by pinching when the channel 112 is clenched. The outer edge of the sheet 121 may be flush or slightly recessed from the face 120 of the filaments. The thin sheet may be EPDM, polyethylene or polypropylene, for example.

The employment of the center membrane is preferable for tough applications where debris or jets of liquid or higher than normal atmospheric pressure differentials may be encountered. It is effective for some applications but not necessarily for others and its inclusion is optional.

Strip brushes may also be made as shown in Figure 10A by forming a flat continuous stack of filaments 122 stacked to form the wall or barrier, and while held one edge may be heated to form a bead 123 which is thermally welded to a plastic backing 124 and then cooled to become permanently combined. The bead and backing may be shaped to fit or slide within a channel of a frame member.

Another construction for strip brushes may employ tufts of the stapled into an elongated plastic backing or base material much like an elongated tooth brush.

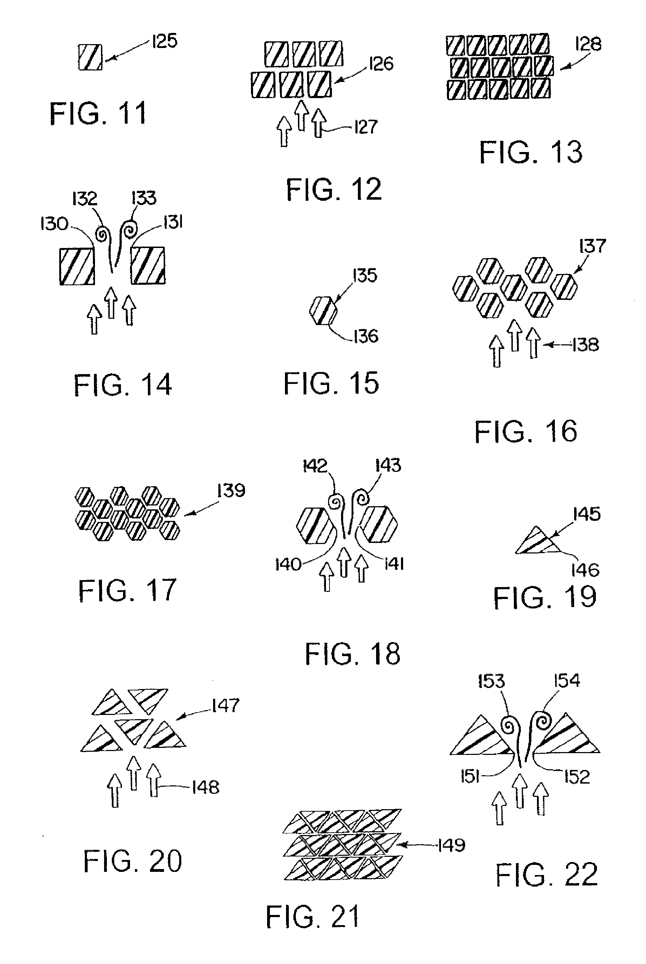

Referring now to Figures 11-14 there is illustrated a rectangular form of filament shown at 125 that is square in section. The rectangular filament has four 90° corners and is symmetrical about its vertical and horizontal centers or axis, like a rectangle. Figure 12 illustrates a group of such filaments arranged in a brickwork or inter-fitting fashion to create a wall or barrier 126 to impede the flow of smoke or air from the higher-pressure side indicated by the arrows 127. The edges or corners impede the filaments from moving past each other. As seen in Figure 13 the polygonal filaments nest to form a wall or barrier 128 with little or no interstitial spacing to permit penetration of smoke or gases. Of course the typical filament bundle will contain many more than the three layers illustrated. As seen in Figure 14 the sharp edges seen for example at 130 and 131 create areas of reduced pressure and reduced velocity; as shown by the turbulence seen at 132 and 133 in the form of eddies or vortices. This diminishes the ability of the smoke or flowing gases not only to penetrate the seal, but also to spread the filaments apart.

In Figure 15 there is illustrated a polygonal filament 135 in the transverse shape of a hexagon. Although the corners 136 are not quite as sharp as that of the rectangle the filaments will nest together to form the group 137 seen in Figure 16. The edges none-the-less impede the filaments from moving past each other, being inter-fitted or interlocked, in response to smoke or gas pressure on one side as indicated by the arrows 138. As seen in Figure 17 the hexagonal filaments nest with little or no interstitial spacing to permit penetration of smoke or gases and forming the barrier or wall seen at 139. In Figure 18 the edges or corners 140 and 141 of the hexagon create areas of reduced pressure and velocity indicated by the eddies or vortices 142 and 143, respectively, diminishing the ability of smoke or gases not only to penetrate, but to spread the filaments apart.

In Figure 19 there is illustrated a triangular filament 145 having corners 146 that are sharper than those of the other illustrated embodiments. As seen in Figure 20 at 147 the filaments inter-fit or intermesh and their shape impedes the filaments from moving past each other in response to the pressure or flow of smoke or gases as indicated by the arrows 148. As seen in Figure 21 the triangular filaments nest or inter-fit with little or no interstitial spacing to form the wall or barrier seen at 149. As indicated in Figure 22 the sharper edges 151 and 152 create areas of reduced pressure and velocity, as indicated by the eddies or vortices 153 and 154 further diminishing the ability of smoke or gases to penetrate or spread the filaments apart.

This of course is in contrast to circular filaments or filaments with more rounded shapes that have little resistance to movement past each other, and separating.

The angled corner transverse configuration of the filaments also makes the filaments somewhat stiffer than circular filaments and accordingly less apt to splay or separate from pressure on one side. This coupled with the angular inter-fitting or locking of the filaments makes for an effective environmental seal. But even if they do separate or splay the corners create vortices or eddies as gases move therepast. Such turbulence further hinders the transfer of gases from one side to the other making a more effective environmental seal.

As a filament material a non-abrasive plastic is preferred such as nylon 6 or polypropylene.

It can now be seen that there is provided a more effective environmental seal for many applications.

Although the invention has been shown and described with respect to certain preferred embodiments, it is obvious that equivalent alternations and modifications will occur to others skilled in the art upon the reading and understanding of this specification. The present invention includes all such equivalent alterations and modifications, and is limited only by the scope of the claims.

## Claims

1. A brush seal for openings comprising a strip brush constructed with filaments being polygonal in transverse section and adapted to nest with each other substantially without voids when unstressed and unseparated to block air flow therethrough.

2. A brush seal as set forth in claim 1 wherein said polygonal filament present relatively sharp corners that create vortices or eddies as air flows therepast.

3. A brush seal as set forth in claim 1 wherein said filaments are square in transverse section.

4. A brush seal as set forth in claim 1 wherein said filaments are triangular in transverse section.

5. A brush seal as set forth in claim 1 wherein said filaments are hexagonal in transverse section.

6. A brush seal as set forth in claim 1 including said brush seal mounted on elevator doors to act as a smoke seal in case of fire.

7. A brush seal as set forth in claim 1 wherein the filaments are nylon.

8. A brush seal as set forth in claim 1 wherein the backing is metal or plastic.

9. A brush seal as set forth in claim 1 including said brush seals mounted in a computer room grommet to allow wiring access while restricting the flow of conditioned air.

10. A brush seal comprising a strip brush with filaments being polygonal in transverse section, and a backing being of metal or plastic.

11. A brush seal as set forth in claim 10 wherein said filaments are of a polygonal transverse sectional shape adapted to nest with each other to form a wall.

12. A brush seal as set forth in claim 10 wherein said polygonal filament present relatively sharp corners that create vortices or eddies as air flows therepast.

13. A brush seal as set forth in claim 10 wherein said filaments are square in transverse section.

14. A brush seal as set forth in claim 10 wherein said filaments are triangular in transverse section.

15. A brush seal as set forth in claim 10 wherein said filaments are hexagonal in transverse section.

16. A brush seal as set forth in claim 10 including said brush seal mounted on elevator doors to act as a smoke seal in case of fire.

17. A brush seal as set forth in claim 10 wherein the filaments are nylon.

18. A brush seal as set forth in claim 10 including said brush seals mounted in a computer room grommet to allow wiring access while restricting the flow of conditioned air.
